# EUROPEAN PATENT APPLICATION

(11) **EP 0 660 266 A1**
(43) Date of publication of application: **28.06.1995**
(21) Application number: 94919833.7
(22) Date of filing: 30.06.1994
(51) Int. Cl.: G06T 1/20, G09G 5/36, H04N 5/262

(54) **IMAGE PROCESSING METHOD AND DEVICE THEREFOR**

(30) Priority: 30.06.1993 JP 162976/93
(71) Applicant: SEGA ENTERPRISES, LTD., Tokyo 144 (JP)
(72) Inventor: KAJIWARA, Seiichi, Sega Enterprises, Ltd., Tokyo 144 (JP); HORI, Shuji, Sega Enterprises, Ltd., Tokyo 144 (JP)
(74) Representative: Eisenführ, Speiser & Partner
(86) International application number: JP9401067
(87) International publication number: WO9501609

(57) **Abstract**

From a frame buffer (23), the image data already written in the addresses which correspond to an image having an arbitrary shape are read from a frame buffer (23), and the values of predetermined bits of read-out image data are altered, and again, the image data are written in the addresses. Further, when the image data of the foreground are read from the frame buffer (23) at predetermined timings, whether the value of each predetermined bit is the altered value or not is checked. In the case of an altered bit value, the image data having the altered bit value is judged to be image data constituting the inside region of a window, and transparency processing or color computation processing of one of the inside and outside of the window are performed. Thereby, the predetermined bits of the image data written in the frame buffer can be altered, and according to this, a window having any complex shape can be set.

## Description

### TECHNICAL FIELD

This invention, used primarily in video entertainment systems, relates to an image processing method and a system for rewriting image data in a frame buffer.

### BACKGROUND ART

On an image processing system used in a conventional video entertainment system, the foreground image (dynamic image) containing the characters of a game, as well as a plurality of underlying background images (static images) containing background images, is displayed on a raster scan monitor screen. At a position where these foreground and background images, each assigned its own priority, are overlapped, only one of foreground or background images with the highest priority is displayed. A priority number is assigned to each priority level, and a image with a highest priority is displayed on top of the others. For background images, a priority number is assigned for each screen; for foreground images, it is assigned to each character.

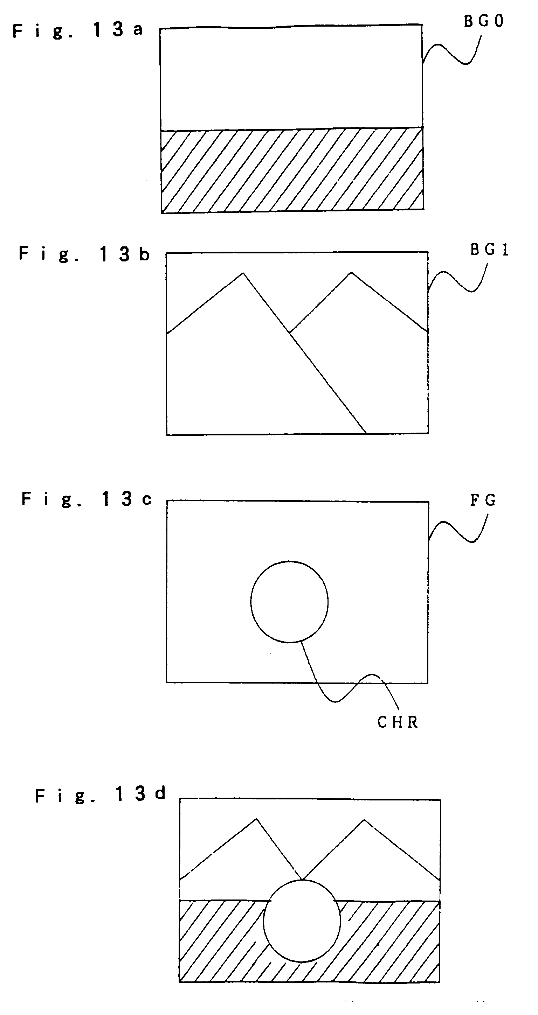

For example, in Figure 13, where background image BG0 (Figure 13a), background image BG1 (Figure 13b), and foreground image FG (Figure 13c) are shown, suppose that the priority number of background image BG0 is 4, the priority number of background BG1 is 2, and that the priority number of the character CHR of the foreground image FG is 6. When they are overlapped, the character CHR is displayed on background BG0, which is displayed on background image BG1, as shown in Figure (Figure 13d).

In this type of image processing system, to provide a variety of display, an image area, called a window, is can set up on each of foreground and background images. And, an image on which several kinds of window processing, such as transparency processing or color processing, have been performed is sometimes displayed inside or outside of a window. This window processing, which can be done irrespective of priority, performs transparency processing or color operation processing on a specific part of the screen to prevent an image in that portion of the screen from being displayed.

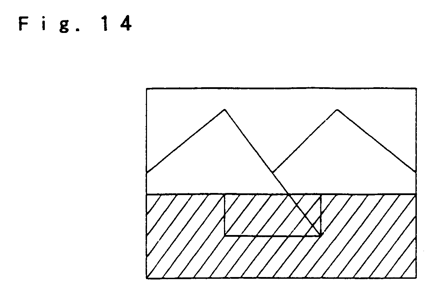

An example is shown in Figure 14, where background image BG1 is seen through background image BG0. This is accomplished by setting up a window in a transparent portion and, within that portion, by performing color operation processing. When a plurality of screens are overlapped, this color operation processing makes the underlying image seen through the overlaying image by adding the color data at the same coordinates on each screen.

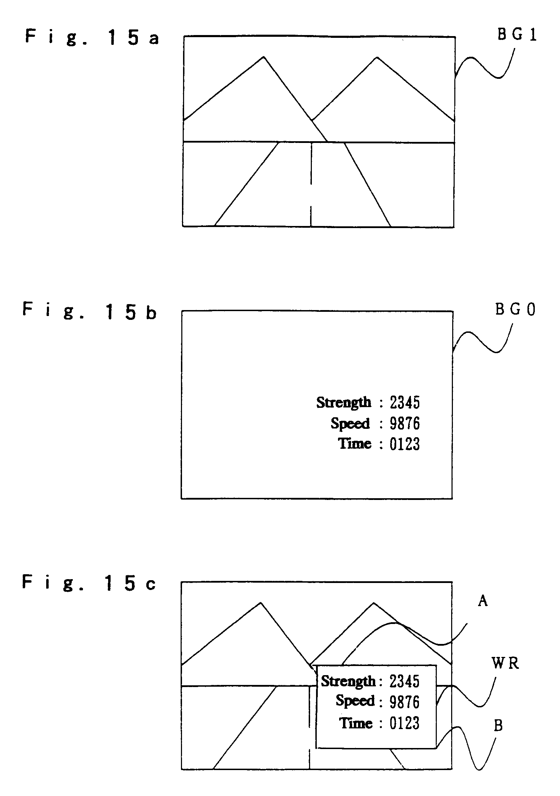

Sometimes, information about the player's state (physical strength, play time, etc.), which is not normally displayed, must be displayed while the player is playing the game, with the background such as the one shown in Figure 15a displayed. To display this kind of information, a low-priority background BG0, shown in Figure 15b, is set up and then, after opening the window WR as shown in Figure 15c, transparency processing is performed within that window to make background BG0 appear.

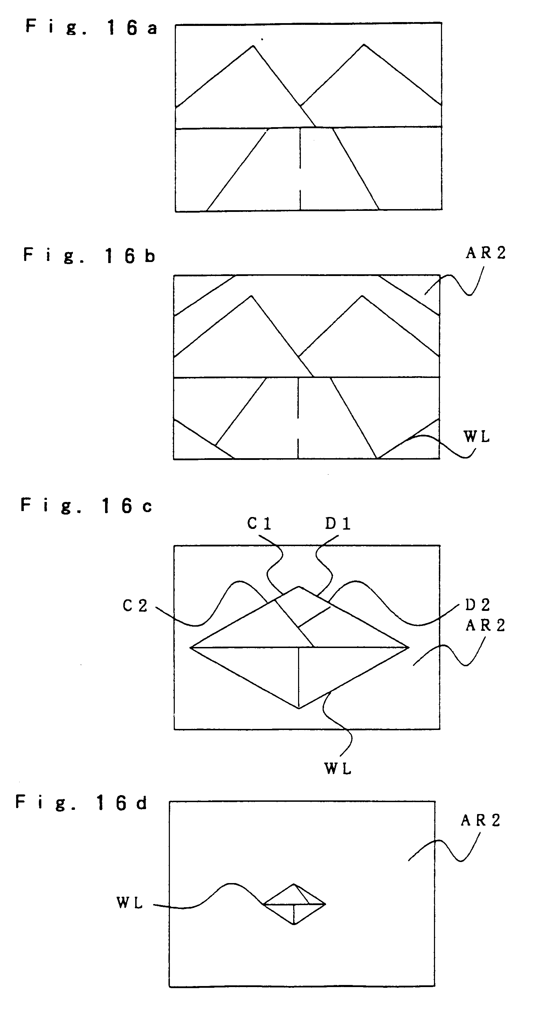

In addition, when a game stage is cleared, there are cases in which the display screen must be cleared gradually, as shown in Figure 16a - 16d. In this case, the window WL is set up for each of the foreground image FG and background images BG0 and BG1 and, outside of each of these windows, transparency processing is performed. In the area AR2 outside of the window WL, neither the foreground images nor background images are displayed, resulting in the display of the preset single-color back screen. And, as shown in 16c - 16d, the window WL of each screen is changed and therefore the back screen becomes larger, and the display screen looks as if it disappeared gradually.

An image processing system, which displays a variety of images using priorities and windows, consists of two components: one is a display control section which outputs foreground image and background image data according to the above-mentioned priority numbers and the other is a window control section which controls the above-mentioned windows. This window control section sets up a window location and, within or outside the window, performs the above-mentioned color processing and transparency processing. The display control section and the window control section have internal registers into which the CPU loads commands.

There are two types of window: rectangle window and line window. A rectangle window WR, which is shown in Figure 15c, is set up by setting the coordinates of the vertical and horizontal start points A and the vertical and horizontal end points B in the register in the window control section.

A line window WL is shown in Figures 16b - 16d and Figure 17a. As shown in Figure 17a, the coordinate table of the start point C (C1, C2, ...) and end point D (D1, D2, ...) of each line displayed on the screen is stored in the storage means such as VRAM. And, the address of this table, as well as the coordinates of the horizontal start point E and end point F, is set in the register of the control section.

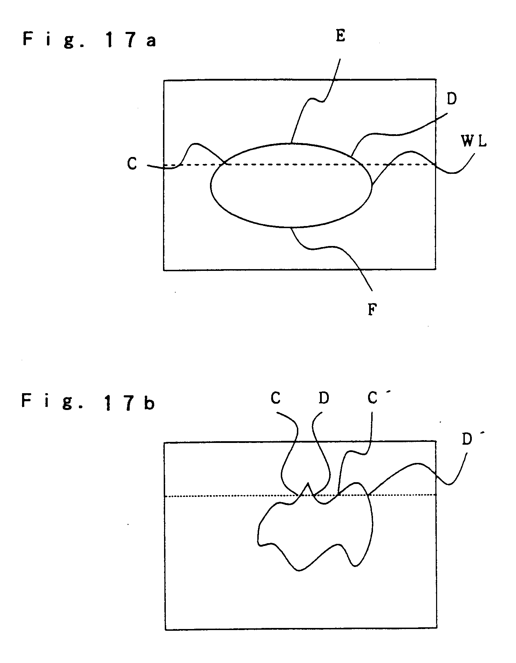

For two types of window described above, however, it is impossible to display a complex image. That is, a rectangle window is always of rectangle shape. On the other hand, although it is possible to generate a window of any shape using a line window because the start point and the end point of each line are specified. However, only one set of a start point and an end point may be specified for each line. This means that a window which has two sets of a start point and an end point (C and D, and C' and D' as shown in Figure 17b) cannot be used.

To solve this problem and to set up a window of any shape, a check must be made to see if each pixel on the screen is inside the window. However, this method requires a register to indicate if each pixel on the screen is inside a window. At the same time, it is necessary to indicate whether to perform transparency processing or color processing for each pixel. This results in an increased amount of hardware and increased loads on the CPU to set up registers.

The image processing system described above has RAM and a frame buffer: RAM contains drawing commands for the foreground image FG and the image data such as characters for the foreground image FG. The frame buffer contains image data read from RAM which corresponds to the monitor screen.

Image data is read from RAM and, after rotation and color processing has been performed, it is written at the specified address in the frame buffer. Then, in synchronization with the timing signal, it is sent to the display control section. In this way, image data is only written into, and read from, the conventional frame buffer.

In view of the problems with the prior art described above, it is a first object of this invention to provide a frame buffer access method of changing only a specified bit of image data stored in the frame buffer.

A second object of this invention is to provide a frame buffer access method of changing a bit of image data corresponding to the shape of an image stored in the image data storage means.

A third object of this invention is to provide an image processing method of crating a complex-shaped window without using a special piece of hardware.

A fourth object of this invention is to provide an image processing method of combining a traditional fixed-shaped window with a complex-shaped window.

A fifth object of this invention is to provide an image processing method of creating the above-mentioned window efficiently without having to extend the conventional frame buffer area.

A sixth object of this invention is to provide an image processing method of displaying a lower-priority image either inside or outside the above-mentioned window.

A seventh object of this invention is to provide an image processing method of displaying the underlying image through the overlapping image either inside or outside the above-mentioned window.

An eighth object of this invention is to provide an image processing method of performing efficient image processing on the screen either inside or outside the above-mentioned window.

A ninth object of this invention is to provide an image processing method of creating a window for image data stored in the image data storage means.

A tenth object of this invention is to provide a frame buffer access system to implement the first object described above.

An eleventh object of this invention is to provide a frame buffer access system to implement the second object described above.

A twelfth object of this invention is to provide a frame buffer access system to implement the third object described above.

A thirteenth object of this invention is to provide a frame buffer access system to implement the fourth object described above.

A fourteenth object of this invention is to provide an image processing system for changing only a specified bit in image data stored in the frame buffer.

A fifteenth object of this invention is to provide an image processing system for creating a window for the shape of image data stored in the image data storage means.

A sixteenth object of this invention is to provide an image processing system for implementing the above-mentioned image processing method efficiently without having to extend the conventional frame buffer area.

A seventeenth object of this invention is to provide an image processing system for determining whether or not each pixel is inside a window.

An eighteenth object of this invention is to provide an image processing system for creating a window for each screen in the foreground and in the background.

A nineteenth object of this invention is to provide a video entertainment system for creating a complex-shaped window without using a special piece of hardware.

A twentieth object of this invention is to provide a video entertainment system for combining a traditional fixed-shaped window with a complex-shaped window.

A twenty-first object of this invention to provide a video entertainment system for changing only a specified bit of image data stored in the frame buffer.

A twenty-second object of this invention is to provide a video entertainment system for creating a window for image data stored in the image data storage means.

A twenty-third object of this invention is to provide a video entertainment system for implementing the above-mentioned image processing method efficiently without having to extend the conventional frame buffer area.

A twenty-fourth object of this invention is to provide a video entertainment system for determining whether or not each pixel is inside a window.

A twenty-fifth object of this invention is to provide a video entertainment system for creating a window for each screen in the foreground and in the background.

### SUMMARY OF THE INVENTION

To achieve the above object, the frame buffer access method according to claim 1 is a frame buffer access method of reading image data from an image data storage means and writing the image data into a frame buffer, the frame buffer access method comprising the steps of: reading image data, already stored at an address corresponding to an image of a shape, from the frame buffer; changing the value of a specified bit of image data read from the frame buffer; and writing the image data back at the address in the frame buffer.

Thus, the invention according to claim 1, which is structured as described above, enables the specified bit of image data, already stored in the frame buffer, to be changed.

The frame buffer access method according to claim 2 is a frame buffer access method as claimed in claim 1, wherein the shape is specified by the shape of an image read from the image data storage means. Thus, this method enables the specified bit of image data in the frame buffer to be changed according to the shape of an image stored in the image data storage means.

The image processing method according to claim 3 is an image processing method comprising the steps of: reading image data, set up for each pixel of a foreground image, from the first storage means and expanding it into a frame buffer; reading the image data from the frame buffer in a specified timing and, at the same time, reading image data, set up for each pixel of at least one background screen, from the second storage means; and comparing the display priority of image data of the foreground image with the display priority of image data of the background image and, based on this priority, generating display data by combining the foreground image and the background image, wherein, image data already stored at an address corresponding to an image of a shape is read from the frame buffer; the value of a specified bit of the image data read from the frame buffer is changed; the image data is written back at the address in the frame buffer; and a check is made, when reading the image data of the foreground image in the specified timing from the frame buffer, to see whether or not the value of the specified bit has been changed and, if it has been changed, image data with the changed value is displayed inside a window and image processing is performed either inside or outside of this window. Thus, this method allows a window to be created using image data expanded in the frame buffer, eliminating the need for special registers. In addition, since it is possible to determine whether or not each pixel of image data is contained in a window, a complex-shaped window can be created.

The image processing method according to claim 4 is an image processing method comprising the steps of: reading image data, set up for each pixel of a foreground image, from the first storage means and expanding it into a frame buffer; reading the image data from the frame buffer in a specified timing and, at the same time, reading image data, set up for each pixel of at least one background screen, from the second storage means; and comparing the display priority of image data of the foreground image with the display priority of image data of the background image and, based on this priority, generating display data by combining the foreground image and the background image, wherein, the area of a first window is determined by specifying the coordinates of the vertical and horizontal start points and end points of the first window whose shape has been set up for at least one of the foreground image and background image; image data already stored at an address corresponding to an image of a shape is read from the frame buffer; the value of a specified bit of the image data read from the frame buffer is changed; the image data is written back at the address in the frame buffer; and a check is made, when reading the image data of the foreground image in the specified timing from the frame buffer, to see whether or not the value of the specified bit has been changed and, if it has been changed, image data with the changed value is displayed inside a second window; and image processing is performed either the inside or outside of the second window and the first window. Thus, a fixed format window generated by specifying the coordinates of the vertical and horizontal start points and end points can be combined with a complex-shaped window generated on a pixel basis.

The image processing method according to claim 5 is an image processing method as claimed in claim 3 or 4, wherein the value of the most significant bit of the image data read from the frame buffer is changed. Thus, since this method uses the most significant bit which does not affect other processing, it does not require a special area, ensuring increased efficiency.

The image processing method according to claim 6 is an image processing method as claimed in claim 3, 4, or 5, wherein the image processing is a transparency processing in which one or more pixels of a foreground image or at least one of background images is forced to change to transparent pixels in either the inside or outside of the window. Thus, performing transparency processing on either the inside or outside of the window allows a low-priority image to be displayed there.

The image processing method according to claim 7 is an image processing method as claimed in claim 3, 4, or 5, wherein the image processing is a color operation processing in which color operation, including addition operation, is performed on the image data of non-transparent pixels in either the inside or outside of the window. Thus, performing color processing on either the inside or outside of the window allows the underlying image to be seen through the overlapping image.

The image processing method according to claim 8 is an image processing method as claimed in claim 3, 4, or 5, wherein either the image processing is a transparency processing in which one or more pixels of a foreground image or at least one of background images is forced to change to transparent pixels in the inside or outside of the window, or the image processing is a color operation processing in which color operation, including addition operation, is performed on the image data of non-transparent pixels in the inside or outside of the window. Thus, this method allows a low-priority image to be displayed, or the underlying image to be seen through the overlapping image, in either the inside or outside of the window.

The image processing method according to claim 8 is an image processing method as claimed in claim 3, 4, or 5, wherein the shape is specified by the shape of an image read from the image data storage means. Thus, this method enables a window to be created according to the shape of an image stored in the image data storage means.

The frame buffer access system according to claim 10 is a frame buffer access system having a first terminal to which an image data storage means is connected and a second terminal to which a frame buffer is connected, the frame buffer access system comprising: an address specification means for specifying an address in the frame buffer corresponding to an image of any shape; a frame buffer read means for reading image data, already stored at an address specified by the address specification means, from the frame buffer; a bit change means for changing the value of a specified bit of image data read by the frame buffer read means; and a frame buffer write means for accessing the frame buffer and for writing back the image data whose value of the specified bit has been changed. Thus, this system can read already-stored image data from an address in the frame buffer corresponding to an image of any shape. And, the specified bit of the image data read from this frame buffer is changed, and then the image data is written back at the above address in the frame buffer.

The frame buffer access system according to claim 11 is a frame buffer access system as claimed in claim 10, wherein the address specification means specifies an address corresponding to an image to be read from the image data storage means. Thus, the address specification means specifies an address corresponding to the shape of an image stored in the image data storage means, making it possible to change specified bits of image data corresponding to the shape of this image.

The image processing system according to claim 12 is an image processing system comprising: a CPU for issuing a command; a first storage means in which the command for displaying a foreground image on a display and image data set up for each pixel of the foreground image are stored; a frame buffer in which image data corresponding to the foreground image to be displayed on a display is stored; a foreground image control means for reading the image data of the foreground image from the first storage manes and then writing the image to the frame buffer and for reading the image data from the frame buffer in a specified timing for output; a second storage means in which image data set up for each pixel of a background image is stored; and a background image control means for reading the image data from the second storage means based on a command issued from the CPU, for determining the display priority of the image data of a foreground sent from the foreground image control means and the image data of the background image, and, based on the priority, for generating display data obtained by combining the foreground image and background image, wherein, the foreground image control means reads image data expanded in the frame buffer and specified by the command, changes the value of a specified bit, and then writes the image data back to the same address in the frame buffer; and the background image control means determines the image data to be image data that is displayed inside a window and performs image processing on the inside or outside of this window when the value of the specified bit of foreground image data sent from the foreground image control means has been changed by the foreground image control means. Thus, the foreground image control means reads image data, which is to be displayed in the inside of the window, from image data expanded in the frame buffer, changes the value of the specified bit, and then writes the image data back to the same location. This image data is processed as the image data displayed in the inside of the window by the background image control means. And, the background image control means performs image processing on either the inside or the outside of this window.

The image processing system according to claim 13 is an image processing system comprising: a CPU for issuing a command; a first storage means in which the command for displaying a foreground image on a display and image data set up for each pixel of the foreground image are stored; a frame buffer in which image data corresponding to the foreground image to be displayed on a display is stored; a foreground image control means for reading the image data of the foreground image from the first storage manes and then expanding the image in the frame buffer and for reading the image data from the frame buffer in a specified timing for output; a second storage means in which image data set up for each pixel of a background image is stored; and a background image control means for reading the image data from the second storage means based on a command issued from the CPU, for determining the display priority of the image data of a foreground sent from the foreground image control means and the image data of the background image, and, based on the priority, for generating display data obtained by combining the foreground image and background image, wherein, the CPU specifies the coordinates of the vertical and horizontal start points and end points of a first window, whose shape has been set up beforehand, for at least one of the foreground image and background image, for the background image control means; the foreground image control means reads image data expanded in the frame buffer and specified by the command, changes the value of a specified bit, and then writes the image data back to the same address in the frame buffer; and, the background image control means determines the image data to be the image data that is displayed inside a second window and performs image processing on the inside or outside of this second window and the first window when the specified bit of foreground image data sent from the foreground image control means has been changed by the foreground image control means. Thus, the CPU specifies the coordinates of the vertical and horizontal start points and end points of a window whose shape is set up beforehand, for at least one of said foreground image and background image. This allows a complex-shaped window, set up by the foreground control means on a pixel basis, to be combined with a window generated as described above.

The image processing system according to claim 14 is an image processing system as claimed in claim 12 or 13, wherein the foreground image control means comprising: an address specification means for specifying an address in the frame buffer corresponding to an image of any shape; a frame buffer read means for accessing the frame buffer and for reading image data already stored at an address specified by the address specification means; a bit change means for changing the value of a specified bit of image data read by the frame buffer read means; and a frame buffer write means for accessing the frame buffer and for writing back the image data whose value of the specified bit has been changed. Thus, the frame read means reads image data already stored at an address in the frame buffer corresponding to an image of any shape. And, the value of the specified bit of the image data read from this frame buffer is changed and then written back to the above address in the frame buffer.

The image processing system according to claim 15 is an image processing system as claimed in claim 14, wherein the address specification means specifies an address corresponding to an image read from the image data storage means. Thus, the address specification means specifies an address corresponding to the shape of an image stored in the image data storage means, allowing a window to be created according to the shape of an image stored in the image data storage means.

The image processing system according to claim 16 is an image processing system as claimed in claim 14, wherein the bit change means changes the value of the most significant bit of the image data. Thus, the bit change means, which uses the most significant bit as the specified bit, does not affect other processing and does not require a new area, ensuring increased efficiency.

The image processing system according to claim 17 is an image processing system as claimed in claim 12 or 13, wherein the foreground image control means comprising: a window detection section for detecting whether or not the value of the specified bit of image data of the foreground image has been changed by the foreground image control means; a window control section for determining that image processing is to be performed on either the inside or outside of a window consisting of image data according to a command from the CPU when the window detection section has detected that the value of the specified bit of the image data has been changed; a background image control section for accessing the second storage means and for reading the image data of the background image; and a display control section for combining the image data of the foreground image and the image data of the background image for output under control of the window control section. Thus, the window detection section checks the value of the specified bit in the image data of a foreground image to determine whether or not each pixel is in the inside of the window.

The image processing system according to claim 18 is an image processing system as claimed in claim 17, wherein the window control section comprising: a color operation control section for outputting a color operation processing signal indicating that color operation, including addition operation, be performed on the image data of non-transparent pixels for either the inside or the outside of the window according to a command from the CPU and to the detection result of the window detection section; a foreground image transparency processing control section for setting up a window for the foreground image according to a command from the CPU and to the detection result of the window detection section and for outputting a foreground image transparency processing signal indicating that a pixel be forced to change to a transparent pixel for either the inside or the outside of the window; and at least one background image transparency processing control section for setting up a window in the background image according to a command from the CPU and to the detection result of the window detection section for each of the background images and for outputting a background image transparency processing signal indicating that the transparency processing be performed on either the inside or the outside of the window, and the display control section comprising: a first switch means for forcing the image data of the foreground image to change to the image data of transparent pixels when the foreground image transparency processing signal is received; at least one second switch means for forcing the image data of the background image to the image data of transparent pixels when the background image transparency processing signal is received, for each of the background image transparency processing control section; and a color operation circuit for performing the color operation on image data where the coordinates of the foreground image match the coordinates of the background image when the color operation processing signal is received. Thus, because a color operation processing indication and a transparency processing indication are separated and because a transparency processing indication is issued for each screen, a window can be created in each foreground image screen and background image screen and, at the same time, color operation processing and transparency processing can be performed on each of them.

The video entertainment system according to claim 19 is a video entertainment system comprising: a CPU for issuing a command; a first storage means in which the command for displaying a foreground image on a display and image data set up for each pixel of the foreground image are stored; a frame buffer in which image data corresponding to the foreground image to be displayed on a display is stored; a foreground image control means for reading the image data of the foreground image from the first storage manes and then writing the image to the frame buffer and for reading the image data from the frame buffer in a specified timing for output; a second storage means in which image data set up for each pixel of a background image is stored; and a background image control means for reading the image data from the second storage means based on a command issued from the CPU, for determining the display priority of the image data of a foreground sent from the foreground image control means and the image data of the background image, and, based on the priority, for generating display data obtained by combining the foreground image and background image, wherein, the foreground image control means reads image data expanded in the frame buffer and specified by the command, changes the value of a specified bit, and then writes the image data back to the same address in the frame buffer; and the background image control means determines the image data to be image data that is displayed inside a window and performs image processing on the inside or outside of this window when the value of the specified bit of foreground image data sent from the foreground image control means has been changed by the foreground image control means. Thus, the foreground image control means reads the image data, which is to be displayed in the inside of a window, from the frame buffer where image data is expanded, changes the specified bit of the image data, and then writes it back at the same location in the frame buffer. The background image control means uses this image data as the image data inside of the window. And, the background image control means performs image processing on either the inside and outside of this window.

The video entertainment system according to claim 20 is a video entertainment system comprising: a CPU for issuing a command; a first storage means in which the command for displaying a foreground image on a display and image data set up for each pixel of the foreground image are stored; a frame buffer in which image data corresponding to the foreground image to be displayed on a display is stored; a foreground image control means for reading the image data of the foreground image from the first storage manes and then expanding the image in the frame buffer and for reading the image data from the frame buffer in a specified timing for output; a second storage means in which image data set up for each pixel of a background image is stored; and a background image control means for reading the image data from the second storage means based on a command issued from the CPU, for determining the display priority of the image data of a foreground sent from the foreground image control means and the image data of the background image, and, based on the priority, for generating display data obtained by combining the foreground image and background image, wherein, the CPU specifies the coordinates of the vertical and horizontal start points and end points of a first window, whose shape has been set up for at least one of the foreground image and background image, for the background image control means; the foreground image control means reads image data expanded in the frame buffer and specified by the command, changes the value of a specified bit, and then writes the image data back to the same address in the frame buffer; and, the background image control means determines the image data to be image data that is displayed inside a second window and performs image processing on the inside or outside of this second window and the first window when the specified bit of foreground image data sent from the foreground image control means has been changed by the foreground image control means. Thus, the CPU specifies the coordinates of the vertical and horizontal start points and end points of a window whose shape is set up beforehand. This allows a complex-shaped window, set up by the foreground control means on a pixel basis, to be combined with a window generated as described above.

The video entertainment system according to claim 21 is a video entertainment system as claimed in claim 19 or 20, wherein the foreground image control means comprising: an address specification means for specifying an address in the frame buffer corresponding to an image of any shape; a frame buffer read means for accessing the frame buffer and for reading image data already stored at an address specified by the address specification means; a bit change means for changing the value of a specified bit of image data read by the frame buffer read means; and a frame buffer write means for accessing the frame buffer and for writing back the image data whose value of the specified bit has been changed. Thus, the frame read means reads image data already stored at an address in the frame buffer corresponding to an image of any shape. And, the value of the specified bit of the image data read from this frame buffer is changed and then written back to the above address in the frame buffer.

A video entertainment system according to claim 22 is a video entertainment system as claimed in claim 21, wherein the address specification means specifies an address corresponding to an image read from the image data storage means. Thus, the address specification means specifies an address corresponding to the shape of an image stored in the image data storage means, allowing a window to be created according to the shape of an image stored in the image data storage means.

A video entertainment system according to claim 23 is a video entertainment system as claimed in claim 21, wherein the bit change means changes the value of the most significant bit of the image data. Thus, the bit change means, which uses the most significant bit as the specified bit, does not affect other processing and does not require a new area, ensuring increased efficiency.

A video entertainment system according to claim 24 is a video entertainment system as claimed in claim 19 or 20, wherein the foreground image control means comprising: a window detection section for detecting whether or not the value of the specified bit of image data of the foreground image has been changed by the foreground image control means; a window control section for determining that image processing is to be performed on either the inside or outside of a window consisting of image data according to a command from the CPU when the window detection section has detected that the value of the specified bit of the image data has been changed; a background image control section for accessing the second storage means and for reading the image data of the background image; and a display control section for combining the image data of the foreground image and the image data of the background image under control of the window control section. Thus, the window detection section checks the value of the specified bit in the image data of a foreground image to determine whether or not each pixel is in the inside of the window.

A video entertainment system according to claim 25 is a video entertainment system as claimed in claim 24, wherein the window control section comprising: a color operation control section for outputting a color operation processing signal indicating that color operation, including addition operation, be performed on the image data of non-transparent pixels for either the inside or the outside of the window according to a command from the CPU and to the detection result of the window detection section; a foreground image transparency processing control section for setting up a window for the foreground image according to a command from the CPU and to the detection result of the window detection section and for outputting a foreground image transparency processing signal indicating that a pixel be forced to change to a transparent pixel for either the inside or the outside of the window; and at least one background image transparency processing control section for setting up a window in the background image according to a command from the CPU and to the detection result of the window detection section for each of the background images and for outputting a background image transparency processing signal indicating that the transparency processing be performed on either the inside or the outside of the window, and the display control section comprising: a first switch means for forcing the image data of the foreground image to change to the image data of transparent pixels when the foreground image transparency processing signal is received; at least one second switch means for forcing the image data of the background image to the image data of transparent pixels when the background image transparency processing signal is received for each of the background image transparency processing control section; and a color operation circuit for performing the color operation on image data where the coordinates of the foreground image match the coordinates of the background image when the color operation processing signal is received. Thus, because a color operation processing indication and a transparency processing indication are separated and because a transparency processing indication is issued for each screen, a window can be created in each foreground image screen and background image screen and, at the same time, color operation processing and transparency processing can be performed on each of them.

### BRIEF DESCRIPTION OF DRAWINGS

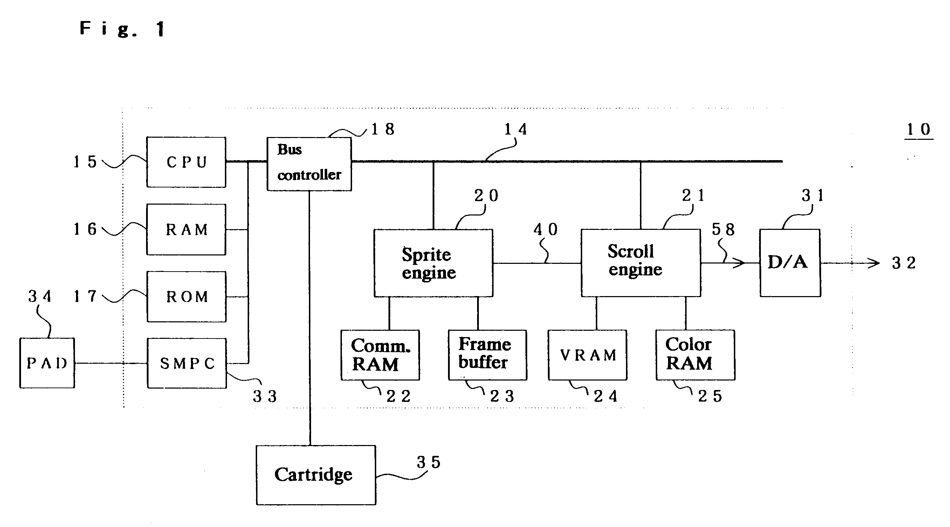

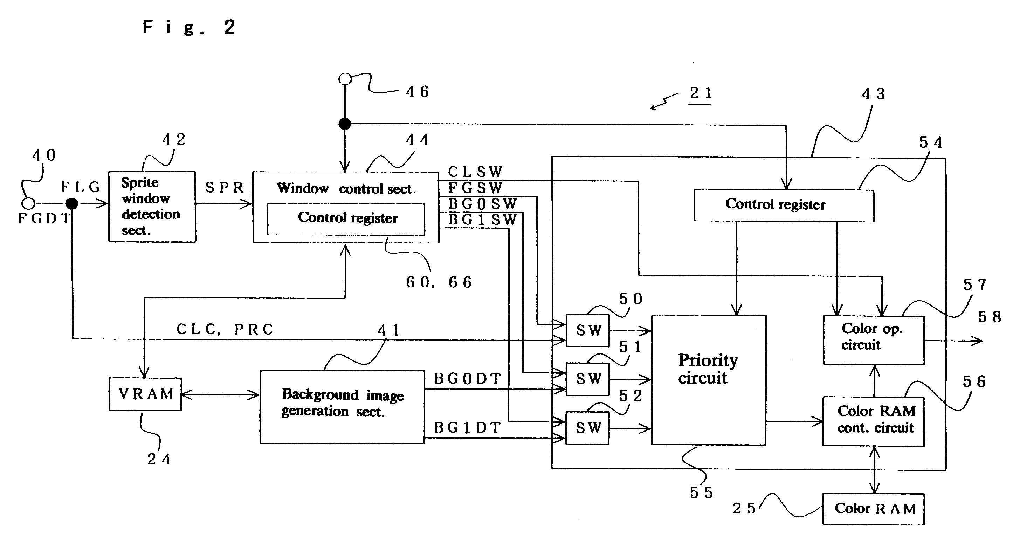

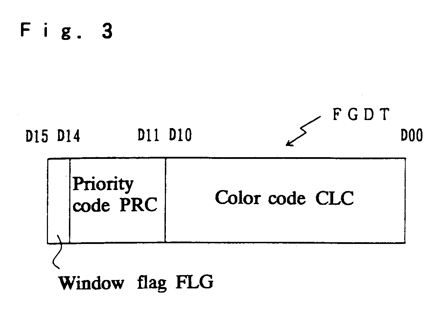

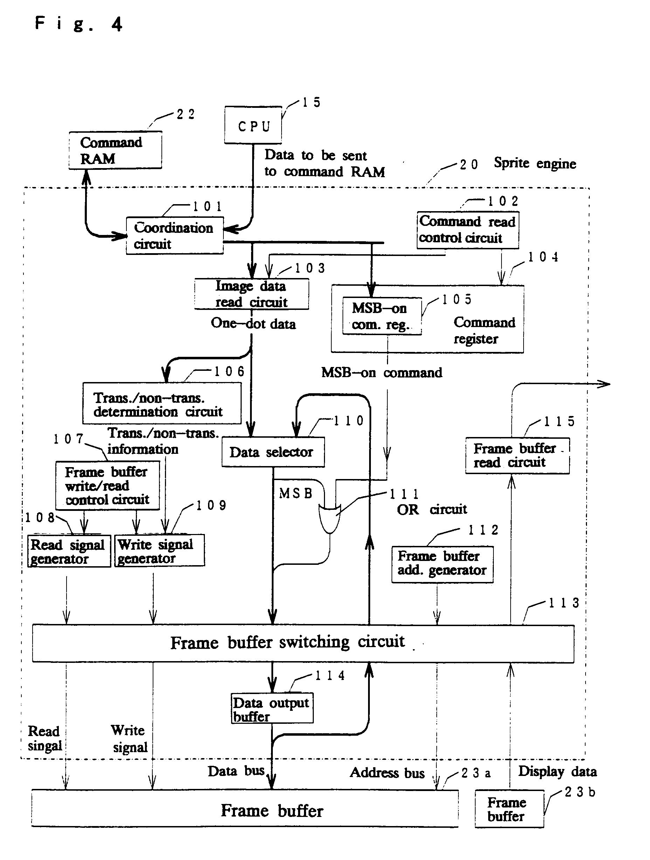

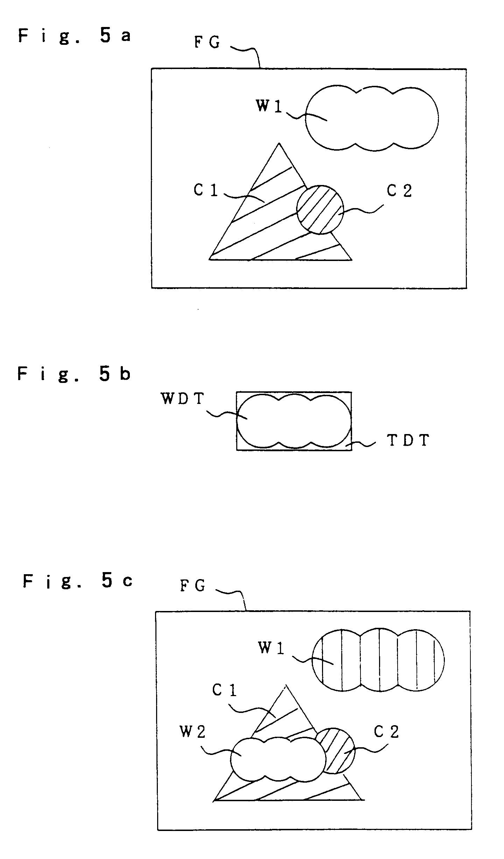

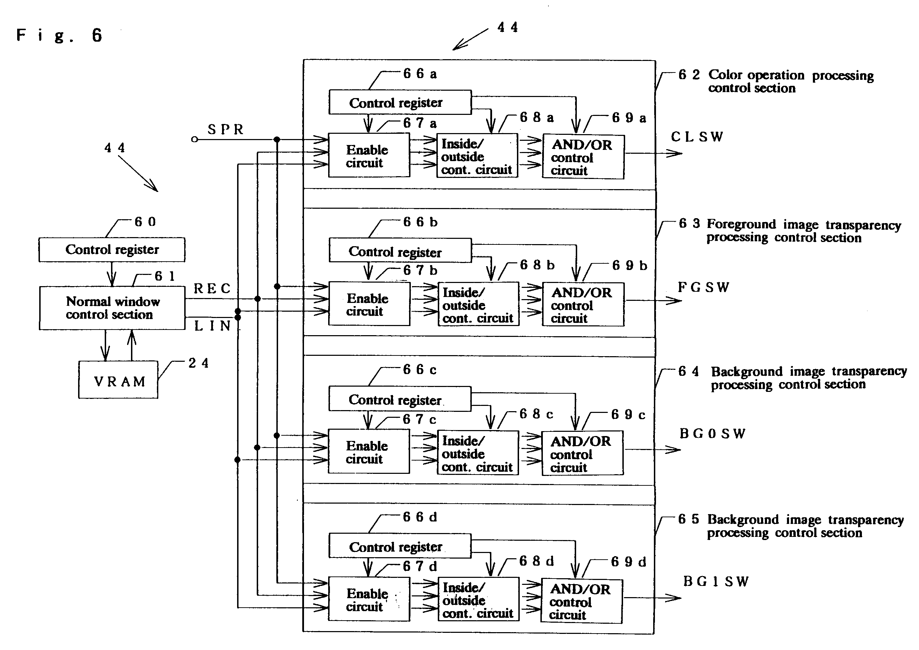

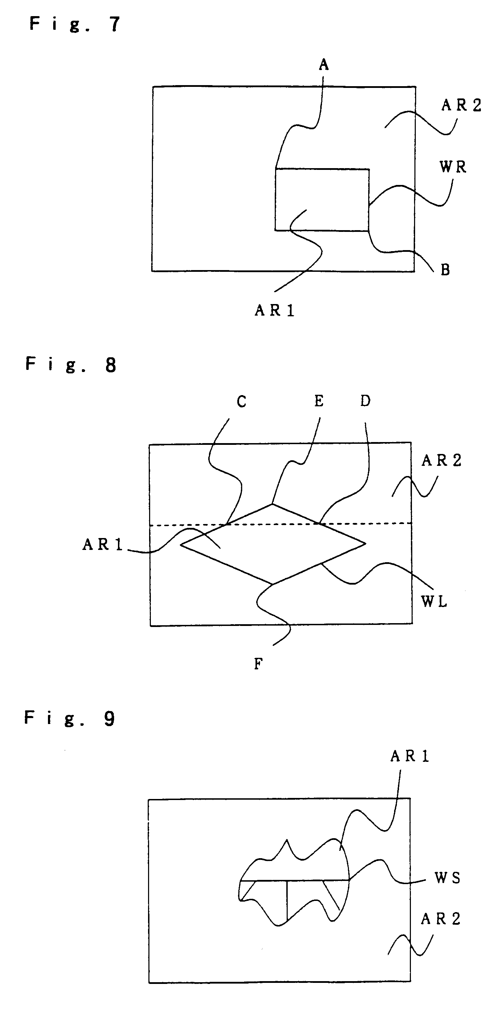

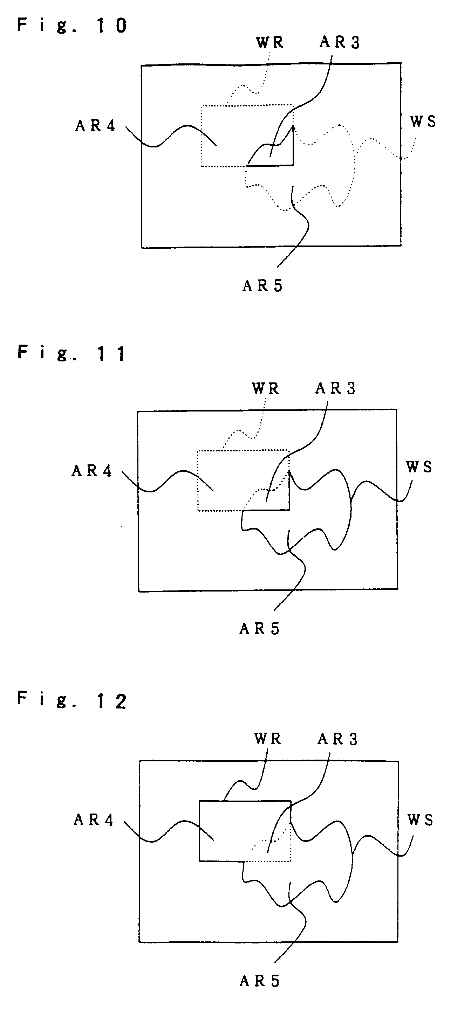

Figure 1 is a block diagram showing the overall configuration of an image processing system used in an embodiment of this invention. Figure 2 is a block diagram showing the configuration of the scroll engine 21 used in an image processing system in an embodiment of this invention. Figure 3 shows the image data FGDT of the foreground image used in the embodiment of this invention. Figure 4 is a block diagram showing the configuration of the sprite engine 20 used in the embodiment of this invention. Figure 5a shows an example of the foreground image FG expanded in the frame buffer, Figure 5b how the character W1 is displayed as the sprite window, and Figure 5c how the character W2 is displayed as the sprite window. Figure 6 is a block diagram showing the configuration of the window control section 44 used in the embodiment of this invention. Figure 7 shows the rectangle window WR. Figure 8 shows the line window WL. Figure 9 shows the sprite window WS. Figure 10 shows an example in which both the rectangle window WR and the sprite window WS are used at the same time. Figure 11 shows an example in which both the rectangle window WR and the sprite window WS are used at the same time. Figure 13a shows background image BG0, Figure 13b background image BG1, Figure 13c foreground image FG, and Figure 13d a screen where background images BG0 and BG1 and the foreground image FG are overlapped. Figure 14 illustrates how color operation processing is performed. Figure 15 illustrates how transparency processing is performed inside a window. Figure 16 illustrates how transparency processing is performed outside a window. Figure 17a explains the line window WL and Figure 17b the problems with a conventional image processing system.

### BEST MODE FOR CARRYING OUT THE INVENTION

Referring to the drawings, there is shown an preferred embodiment of an image processing system of this invention. While there are two background images (BG0 and BG1) in this embodiment, there may be more than or less than two background images.

### (1) Configuration of the embodiment

### (a) Overall configuration

Figure 1 is a block diagram showing an embodiment of an image processing system according to this invention. In the diagram, 10 indicates the video entertainment system main unit. Input devices, such as the control pad 34 which is used by the user to control the video entertainment system, are connected to the video entertainment system main unit 10 via the SMPC (System Manager & Peripheral Control/System Manager). In addition, the removable cartridge 35 containing a game program is mounted on the video entertainment system main unit 10. A semiconductor memory chip (Mask ROM) into which this game program is written is usually contained in the cartridge 35. It is also possible to connect a CD-ROM drive, though not shown in this diagram, to the video entertainment system main unit to allow a game program to be read from CD-ROM.

The CPU 15, RAM 16 used by the CPU 15 as the work area, ROM 17 containing a program, and the above-mentioned SMPC 33 are connected to the bus 14. The CPU 15 consists, for example, of 32-bit RISC-type high-speed CPUs (two CPU chips called SH-2) for controlling the overall system. The SMPC 33, an I/O controller, controls the resetting of the overall system and the interface with external devices such as the control pad 34.

In addition, the sprite engine 20 which processes an image in the foreground and the scroll engine 21 which processes an image in the background are connected to the bus 14. The sprite engine 20 has two components: one is the command RAM 22 which contains command data from the CPU and image data to be used as the original of a foreground image and the other is the frame buffer 23 in which foreground image data is expanded. Also, the scroll engine 21 has two components: one is the video RAM (VRAM) 24 which contains image data for each pixel of a background image and the other is the color RAM 25. The bus controller 18, connected to the bus 14, consists of controllers such as the DMA controller and the interrupt controller to control the interface between the CPU15 and the sprite engine 20 and the interface between the CPU 15 and the scroll engine 21.

The sprite engine 20 selectively reads foreground image data, such as character data, from the command RAM 22 and, after performing rotation, scaling, and color operation on the data, writes it into the specified addresses in the frame buffer 23. The sprite engine 20 also sequentially reads one-frame image data from the frame buffer 23 and directly sends it (i.e., not via the bus 14) to the scroll engine 21. The CPU 15 executes a program stored in the ROM 17 to send command data to the sprite engine 20. This command data, consisting of drawing commands for drawing a foreground image, is written into the command RAM 22 in the form of a command table. The sprite engine 20 reads this command data and sets it into internal system registers for execution.

The VRAM 24 contains pattern data consisting of image data cells, each composed of 8 x 8 pixels. When one frame (background images BG0 and BG1) consists of 28 x 40 cells, the VRAM 24 also contains the pattern name data of each layout. It contains two pattern name data items for two frames, each indicating the start address of pattern data stored in the VRAM 24 as well as control information such as priority. The color RAM 25 contains color data (RGB data) when image data items FGDT, BG0DT, and BG1DT are in the palette format.

In addition, the scroll engine 21 has the terminal 58, from which one-pixel RGB data is output to the D/A converter 31 in synchronization with the horizontal synchronization signal. The D/A converter converts the above RGB data to the analog signal and outputs it from the terminal 32 as the video signal. This video signal is sent to the monitor, which is not shown in the diagram, for display on the TV screen.

### (b) Foreground image data

Figure 3 shows the one-pixel image data FGDT to be processed by the sprite engine 20. As shown in this figure, one pixel is represented by 16 bits. The low-order 11 bits, D0 - D10, are color code (CLC) bits, which indicate an address in the color RAM 25. One dot of a character displayed in the foreground is represented in 4 bits or 8 bits in the command RAM 22; when it is written in the frame buffer 23, a color RAM address offset value specified for the character is added to the high-order bits of the character data. The next high-order bits, D11-D14, are used as the priority code PRC. When multiple images are overlapped, priority code values are compared on a pixel basis. And, a higher-priority pixel is displayed in preference to a lower-priority pixel.

The high-order bit D15 is the window flag FLG. When it is "1", the pixel is in the window; when it is "0", the pixel is not in the window. The setting of this window flag FLG will be described later.

### (c) Configuration of sprite engine 20

The sprite engine 20 has the MSB-on function. In this embodiment, a character that is written at a specified location in the frame buffer 23 is not simply written; instead, the data is once read from the buffer, the Most Significant Bit (MSB) of the data is changed from "0" to "1", then the data is re-written at the same address. This function is called the MSB-on function. This MSB-on function is used to set the window flag FLG of the foreground FG image data FGDT described above.

Referring to Figure 4, there is shown the configuration of the sprite engine 20 to explain the MSB-on function. As shown in the figure, the frame buffer 23 used in this embodiment is divided into two, frame buffer 23a and frame buffer 23b, whose usage can be switched between drawing and display as necessary. In this figure, it is assumed that the frame buffer 23a is used for drawing and that the frame buffer 23b is used for display. Note that data is erased each time the usage of the frame buffers 23a and 23b is switched between drawing and display.

In Figure 4, 101 is the coordination circuit. It controls the interface among the CPU 15, sprite engine 20, and command RAM 22, and coordinates the transfer operation of command data from the CPU 15 to the command RAM 22 and the read operation of command data and image data from the command RAM 22. 102 is the command read control circuit, which reads command data from the command RAM 22. 103 is the image data read circuit, which reads the image data of a character, for which drawing is specified by the command data, from the command RAM 22 and outputs one-dot image data.
104 is the command register, into which one piece of command data on the foreground character image read from the command read control circuit 102 is stored. 105 is the MSB-on command register which is a one-bit register in the command register. It contains the on/off specification bit specifying whether or not the MSB-on function is to be turned on or off. When the MSB-on function is used, this bit is "1"; when the function is not used, this bit is "0". This MSB-on function is specified for each character.
106, the transparency/non-transparency determination circuit, determines whether or not image data read from the image data read circuit 103 is transparent and outputs the result as the transparency/non-transparency information. In this case, if the color code CLC of image data is "0000H", the image data is transparent data; otherwise, the image data is non-transparent data.
107, the frame buffer write/read control circuit, controls when to read data from, or re-write data to, the frame buffer 23a when the MSB-on function is set. 108 is the read signal generator which generates the read signal for reading data from the frame buffer 23a for drawing. 109 is the write signal generator which generates the write signal for writing data into the frame buffer 23a. Upon receiving the transparency/non-transparency data from the transparency/non-transparency determination circuit 106 indicating that the dot be transparent, the write signal generator 109 does not generate the write signal.
110, the data selector, outputs image data sent from the image data read circuit 103 when the MSB-on function is not set, and outputs image data read from the frame buffer 23a when the MSB-on function is set. 111, the OR circuit, performs OR operation on the MSB of image data that is output from the data selector 110 and the on/off specification bit that is set in the MSB-on command register 105.
112, the frame buffer address generator, generates an address signal, which indicates address within the frame buffer 23a that is to be accessed by the sprite engine 20. 113 is the frame buffer switching circuit which switches the buffer between the drawing frame buffer 23a and the display frame buffer 23b at an 1/60 second interval. 114 is the data output buffer, into which image data output from the data selector 110 is once stored; it is output upon receiving the write signal from the write signal generator 109. When the MSB-on function is set, no data is output from this data output buffer 114.
115 is the frame buffer read circuit which reads image data from the display frame buffer 23b and outputs it to the scroll engine 21.

In this configuration, assume that the characters C1, C2, and W1 are expanded in the foreground FG as shown in Figure 5a, and that they are written in order C1, C2, and W1. The data value on dot basis is "0001H", "0002H", and "0003H", respectively. Also, assume that the image data of the character W1 that is read consists of the image data of the drawing dot WDT and the image data of transparent dot TDT, as shown in Figure 5b. For example, the window in the shape of the character W1 is formed on the TV screen.

First, the sprite engine 20 writes "0001H" in the shape of the character C1 at the specified address in the frame buffer 23. In this case, when the image data of the character C1 is read by the image data read circuit 103 according to the command data read by the command read control circuit 102, one-dot image data is output to the data selector 110. The data selector 110 outputs the received image data because the MSB-on function is not set.

The MSB of the image data that is output from the data selector 110 is sent to the OR circuit 111. If the MSB of the above image data is "0", the value set in the MSB-on register 105 is also "0" and, therefore, the output from the OR circuit 111 is also "0". The MSB and non-MSB bits are sent to the frame buffer switching circuit 113, and are output to the data output buffer 114. And, when the write signal is sent from the write signal generator 109, they are written in the frame buffer 23a.

The sprite engine 20 also writes "0002H" in the shape of the character C2, and "0003H" in the shape of the character W1, at the specified addresses in the frame buffer 23a.

Note that, for the character W1 to be used as a window, the MSB-on function is specified for the command that is read from the command RAM 22. Therefore, "1" is set in the MSB-on command register 105 in the command register 104. And, the image data of the character W1 is sent from the image data read circuit 103 to the data selector 110 and the transparency/non-transparency determination circuit 106.

When the read signal is generated from the read signal generator 108 under control of the frame buffer write/read control circuit 107, the image data of the character W1 is read from the frame buffer 23a and is sent to the data selector 110. Because "1" is set in the MSB-on command register 105, the data selector 110 outputs the image data that is read from the frame buffer 23a. The MSB of this image data is sent to the OR circuit 111 and, because the MSB-on command register 105 contains "1", "1" is output from the OR circuit.

The output from this OR circuit 111 and the non-MSB bit data from the data selector 110 --- that is, the image data generated by changing the MSB of the image data of the character W1 to "1" ("8003H" --- are sent to the data output buffer 114 via the frame buffer switching circuit 113. And, when the write signal is sent from the write signal generator 109, they are written into the frame buffer 23a. This image data is re-written at the address in the frame buffer 23a where the character W1 was originally written.

On the other hand, when the image data of the transparent dot TDT shown in Figure 5b is sent to the transparency/non-transparency determination circuit 106, it is determined to be transparent and then the transparency/non-transparency information is output to the write signal generator 109. This prevents the write signal generator 109 from generating the write signal. Therefore, the image data sent from the data selector 110 is not written into the frame buffer 23a.

In this way, all the MSBs of the image data inside the character W1 are changed to "1".

As described above, image data whose MSB has been changed to "1" is treated in the scroll engine 21 as the image data of pixels inside a window. A window which is specified as a window in the frame buffer is called a "sprite window".

In the above embodiment, the MSB of the character once written into the frame buffer 23a is changed to "1" to make the window a sprite window. This is not always required. That is, there is no need to write the image data of a character that is read from the command RAM 22; instead, after reading the image data already written at the write address, its MSB may be changed to "1". For example, when writing image data of the character W2 shown in Figure 5c, the image data of the part corresponding to the character W2 (that is, transparent part to characters C1 and C2) is read, and the MSB is changed to "1".

### (d) Configuration of the scroll engine 21

Figure 2 shows the configuration of the scroll engine 21. The background image generation section 41 reads 2-frame pattern name data from the VRAM 24, and reads the pattern data corresponding to this pattern name data. The background image generation section 41 outputs one-pixel image data BG0DT and BG1DT from the pattern data in synchronization with the horizontal synchronous signal. This image data (BG0DT, BG1DT) consists of 15 bits; that is, it contains the priority code PRC and the color code CLC of the image data FGDT in the foreground FG, shown in Figure 3, but does not contain the window flag FLG.

In Figure 2, the image data FGDT of the foreground FG is sent from the sprite engine 20 to the terminal 40. Out of this image data FGDT, the most significant bit D15, which is the window flag FLG, is sent to the sprite window detection section 42, and the color code CLC and the priority code PRC in the remaining low-order 15 bits (D0 - D14) are sent to the display control section 43. When the window flag FLG, which is sent to the sprite window detection section 42, is "1", the sprite window signal SPR that is output to the window control section 44 is turned on.

The window control section 44 has two control registers, 60 and 66. The contents of the control registers 60 and 66 are replaced by the CPU 15 via the terminal 46.

Figure 6 shows the configuration of the window control section 44. In this figure, one of the following registers is set in the control register 60:

Window position RPOS: Start and end coordinates in the vertical and horizontal directions of a normal rectangle window

Line window table address TBL: Start address of the line window table (table containing start and end coordinates of each horizontal line) in the VRAM 24

Window position LPOS: Start and end coordinates in the vertical direction of a normal line window
61 is the normal window control section 1. It determines whether or not a normal window is a rectangle window or a line window and, when the window is a normal line window, retrieves the line window table in the VRAM 24 according to the line window table address TBL. If the pixel is inside a normal rectangle window or inside a normal line window, the rectangle window signal REC or the line window signal LIN is turned on respectively.
62 is the color operation processing section, 63 is the foreground image transparency processing control section, and 64 and 65 are background image transparency processing control sections. These sections have the same configuration; that is each consists of the control register 66a - 66d, enable circuit 67a - 67d, inside/outside control circuit 68a - 68d, and AND-OR control circuit 69a - 69d. Note that the number of background image transparency processing control sections 64 and 65 depends on the number of background images. That is, there are two sections in this embodiment because there are two background images BG0 and BG1. If there are five background images, there are five background transparency processing control sections. In the control registers 66a - 66d, any of the following registers is set.

Color Operation Enable CLENB: Contains information as to whether or not color operation is to be performed for each window.

Window Logic LOG: Contains AND/OR logic information that is used when overlapping a plurality of windows.

Normal Window Enable NWEN1: Contains information as to whether to use a rectangle window for each screen.

Normal Window Enable NWEN2: Contains information as to whether to use a line window for each screen.

Sprite Window Enable SWEN: Contains information as to whether to use a sprite window for each screen.

Normal Window Area NWAR1: Contains information as to which part (inside or outside) of a normal rectangle window on each screen is effective.

Normal Window Area NWAR2: Contains information as to which part (inside or outside) of a normal line window is effective.

Sprite Window Area SWAR: Contains information as to which part (inside or outside) of a sprite window on each screen is effective. That is, it contains information on which area the transparency processing or color operation processing is to be performed.

The rectangle window signal REC and the line window signal LIN, as well as the sprite window signal SPR, are sent to the enable circuits 67a - 67d. The enable circuits 67a - 67d turn on the effective one of the rectangle window signal REC, line window signal LIN, and sprite window signal SPR according to Normal Window Enable NWEN1 and NWEN2 or Sprite Window Enable SWEN that is set in the control registers 66a - 66d. When Color Operation Enable CLENB in the control registers 66a - 66d is set to perform the color operation, only the output signal from the enable circuit 67a is turned on and the signals from the enable circuits 67b - 67d are turned off.

The inside/outside control circuits 68a - 68d turn on one of the rectangle window signal REC, line window signal LIN, and sprite window signal SPR according to Normal Window Area NWAR1 and NWAR2 and Sprite Window Area SWAR when displaying the effective area of the window. The AND-OR control circuits 69a - 69d set up an area on which color operation processing or transparency processing is to be performed according to Window Logic LOG that is set in control registers 66a - 66d when using a plurality of windows.

And, the color operation processing switching signal CLSW, foreground transparency processing switching signal FGSW, background image transparency processing switching signal BG0SW, and background image transparency processing switching signal BG1SW are output from the AND/OR control circuits 69a - 69d, respectively. That is, when transparency processing is performed inside or outside a window in the foreground FG, the foreground image transparency processing switching signal FGSW from the foreground transparency processing control section 63 is turned on. On the other hand, when transparency processing is performed inside or outside a window in the background BG0 or BG1, the background image transparency processing switching signal BG0SW or background image transparency processing switching signal BG1SW is turned on. When color operation processing is performed either inside or outside a window set up on one of the screen, the color operation processing switching signal CLSW is turned on.

Referring again to Figure 2, there are shown the switches 50, 51, and 52 in the display control section 43. The image data FGDT in the foreground image FG not including the window flag FLG -- that is , the priority code PRC and color code CLC -- is sent to the switch 50. When the foreground transparency processing switching signal FGSW from the window control section 44 is off, the switch 50 does not convert the signal but outputs it unchanged; when the signal is on, the switch 50 converts the color code CLC of the input signal to "00H" before outputting it.

The image data BG0DT of the background image BG0 is sent from the background image generation section 41 to the switch 51, and the image data BG1DT of the background image BG1 is sent from the background image generation section 41 to the switch 52. The switch 51 or 52 does not convert the input signal and outputs it unchanged when the background image transparency processing switching signal BG0SW or the background image transparency processing switching signal BG1SW from the window control section 44 is off, respectively; when the switching signal is on, the switch 51 or 52 converts the color code CLC of the input signal to "00H" before outputting it.
54 is the control register, into which any of the following registers is set.
   Priority code PROR: The priority code of the background image BG0 and BG1 is set.
   Special priority mode MODE: The function to change the priority on a character or dot basis in each background is set. When this mode is set, the priority code of that character or dot is also set.
   Color operation ratio RATIO: Addition ratio for color operation
55 is the priority circuit, to which the image data FGDT, BG0DT, or BG1DT from the switches 50, 51, or 52 is sent. The priority circuit 55 checks if the color code CLC of the above image data FGDT, BG0DT, or BG1DT is "00H". When the color code CLC is not "00H", the priority circuit 55 stores the priority code PROR of each background image, which is stored in the control register 54, into the priority code PRC of the background image BG0 and BG1. At this time, if the special priority mode MODE is set, the priority code PRC is set on a character basis or on a dot basis. The priority circuit 55 determines the priority of each image data. When the color code is "00H", the priority circuit assumes that the pixel is transparent and ignores the priority.
56 is the color RAM control circuit. When the image data FGDT, BG0DT, or BG1DT is in the palette format, the color RAM control circuit 56 accesses the color RAM 25 according to the color code CLC sent from the priority circuit 55 to get RGB data. When the image data FGDT, BG0DT, or BG1DT is in the RGB format, the color RAM control circuit 56 uses the color code CLC as RGB data.
57 is the color operation circuit which performs color operation on image data sent from the color RAM control circuit 56. When the color operation processing switching signal CLSW sent from the window control section 44 is on, the color operation circuit 57 performs color operation according to the priority determined by the color operation ratio RATIO, which is stored in the control register 54, and the priority determined by the priority circuit 55. When the color operation processing switching signal CLSW is off, the color operation circuit 57 outputs the RGB data of the top priority image data, sent from the color RAM control circuit 56, from the terminal 58.

When all the color codes (CLC) are "00H", the foreground image FG and background images BG0 and BG1 are all transparent. In this case, the RGB code of the back screen on which the color (single-color) is set is output.

### (2) Operation of the embodiment

The following explains how the image processing system in this embodiment operates.

### A. Color operation processing for a rectangle window

Referring to Figure 7, the following explains how color operation processing is performed inside the rectangle window WR. First, the CPU 15 stores the following information in each control register.

### a. Control register 60

### Window Position RPOS

This information specifies the start point A and the end point B of the rectangle window WR.

### b. Control registers 66a - 66d

### Color Operation Enable CLENB

This information specifies the color operation for the rectangle window WR.

### Normal Window Area NWAR1

This information specifies that the inside of the window is effective.

### c. Control register 54

### Color operation ratio RATIO

In this case, when the area AR1 which is inside the window is displayed, the rectangle window signal REC sent from the normal window control section 61 is turned on. Because Color Operation Enable CLENB is set, the color operation processing switching signal CLSW is turned on. At this time, because Sprite Window Enable SWEN and Normal Window Enable NWEN1 and NWEN2 are not set, the foreground image transparency processing switching signal FGSW and the background image transparency processing switching signals BG0SW and BG1SW are off.

Therefore, image data FGDT, BG0DT, and BG1DT sent to the switches 50, 51, and 52 are all sent to the priority circuit 55 without conversion and, via the color RAM control circuit 56, to the color operation circuit 57. Because the color operation processing switching signal CLSW is on, the color operation circuit 57 performs color operation based on the color operation ratio RATIO that is stored in the control register 54.

On the other hand, when the area AR2 which is outside the window is displayed, the rectangle window signal REC from the inside control circuit 68a is off and, therefore, the color operation processing switching signal CLSW is off. This causes the color operation circuit 57 to select the top priority image data from FGDT, BG0DT, and BG1DT and to output its RGB data to the monitor (not shown in the figure).

Thus, when the area AR1 which is inside the rectangle window WR is displayed, the color operation processing switching signal CLSW is on and, therefore, the color operation is performed; when the area AR2 which is outside the window is to be displayed, the color operation processing switching signal CLSW is off and, therefore, the color processing is not performed.

### B. Transparency processing for a line window

Referring now to Figure 8, the following explains how the back screen is displayed when images are displayed only in the area AR1 which is inside the line window WL and when neither the foreground image FG nor background images BG0 and BG1 are displayed in the area AR2 which is outside the window. To display the back screen in the area AR2 which is outside the line window WL, it is necessary to perform transparency processing on the foreground image FG and background images BG0 and BG1 in the area AR2. First, the CPU 15 sets up the registers as follows:

### a. Control register 60

### Line Window Enable LENB

### Line Window Table Address TBL

This information sets up the addresses of for the coordinates indicating the start points C, C, ... and the end points D, D, ... of each line in the line window table in the VRAM 24.

### Window Position LPOS

This information specifies the vertical start point E and the vertical end point F.

### b. Control registers 66a - 66d

### Normal Window Area NWAR2

This information specifies that the outside of the window is effective.

### Normal Window Enable NWEN2

This information specifies that a line window is used for the foreground image FG and background images BG0 and BG1.

In this case, when the area AR1 which is inside the window is displayed, the line window signals LIN from the inside control circuits 68b - 8d are on. Therefore, the foreground image transparency processing switching signal FGSW and the background image transparency processing switching signals BG0SW and BG1SW are off, and image data FGDT, BG0DT, and BG1DT are sent to the priority circuit 55 without conversion. They are then sent to the color operation circuit 57 via the color RAM control circuit 56, which selects the top-priority image data from FGDT, BG0DT, and BG1DT and outputs its color code CLC.

On the other hand, when the area AR2 which is outside the window is displayed, the line window signal LIN from the normal window control section 61 is off, and the line window signals LIN from the enable circuits 67b - 67d are off. However, because Normal Window Enable NWEN2 is on for the foreground image FG and background images BG0 and BG1 and, at the same time, the outside of the line window WL is effective, the line window signals LIN from the inside/outside control circuits 68b - 68d are on. This turns on the foreground image transparency processing switching signal FGSW, background image transparency processing switching signal BG0SW, and background image transparency processing switching signal BG1SW.

Therefore, the color codes CLC of the image data FGDT, BG0DT, and BG1DT sent to the switches 50, 51, and 52 are all converted to "00H", and are output from the terminal 58. Thus, because transparency processing is performed on the foreground image FG and background images BG0 and BG1 in the area AR2, the single-color back screen is displayed. The line window signals from the enable circuits 67b - 67d are on, but the outside of the line window WL is used. Therefore, the line window signals LIN from the inside/outside control circuits 68b - 68d are off.

Thus, since the foreground image transparency processing switching signal FGSW and the background image transparency processing switching signals BG0SW and BG1SW are on when the area AR2 which is outside the line window WL is displayed, the color code CLC of each pixel is "00H" (transparent). And, since all the above signals are turned on when the inside area AR1 is displayed, transparency processing is not performed.

For the rectangle window WR, transparency processing is possible as with the line window WL described above. For the line window WL, color operation processing is possible as with the rectangle window WR described above.

### C. Sprite window

### 〈Color operation processing〉

The following describes how a background image is seen through a character in a foreground image. To do so, the character in the foreground image is used as a sprite window and, inside the sprite window, color operation processing is performed.

When the sprite engine 20 expands image data in the frame buffer 23, it uses the MSB-on function to convert to "1" the MSB of the image data at which the sprite window is to be displayed. At the same time, the CPU15 stores the following information in the registers:

### a. Control registers 66a - 66d

### Color Operation Enable CLENB

This information specifies color operation for the sprite window WS.

### b. Sprite Window Area SWAR

This information specifies that the inside of the window is effective.

### c. Control register 54

### Color operation ratio

When the sprite engine 20 reads the image data of the character from the frame buffer 23, the sprite window signal SPR is turned on because the window flag FLG of this image data is "1". Since Color Operation Enable CLENB is set in the control registers 66a - 66d, the sprite window signal SPR from the enable circuit 67a is turned on. Then, the color operation processing switching signal CLSW is turned on, and the foreground image transparency processing switching signal FGSW and the background image transparency processing switching signals BG0SW and BG1SW are all turned off.

Therefore, image data FGDT, BG0DT, and BG1DT sent to the switches 50, 51, and 52 are all sent to the priority circuit 55 without conversion and, via the color RAM control circuit 56, to the color operation circuit 57. Because the color operation processing switching signal CLSW is sent to the color operation circuit 57, the color operation circuit 57 performs color operation based on the color operation ratio RATIO that is stored in the control register 54.

On the other hand, when the part of the image data not including the character is read from the frame buffer 23, the sprite window signal SPR is turned off because the window flag FLG of the image data is "0". Therefore, the color operation processing switching signal CLSW is turned off. This causes the color operation circuit 57 to select the top priority image data from FGDT, BG0DT, and BG1DT and to output its RGB data.

To perform color processing only on the screen other than the background image BG0, Sprite Window Enable SWEN is set only on the background image BG0 and transparency processing is performed on the image in the background image BG0.

### 〈Transparency processing〉

Referring now to Figure 9, there is shown a screen on which the background image and foreground image are displayed only in the area AR1 inside the sprite window WS and on which no image is displayed in the area AR2 outside the window. In this case, transparency processing is performed in the area AR2 outside the sprite window WS. First, when the sprite engine 20 expands image data in the frame buffer 23, it uses the MSB-on function to convert to "1" the MSB of the image data at the locations corresponding to the area inside the sprite window shown in Figure 9. At the same time, the CPU15 stores the following information in the registers:

### a. Control registers 66a - 66d

### Sprite Window Area SWAR

This information specifies that the outside of the window is effective.

### Sprite Window Enable SWEN

This information specifies that the sprite window is used for the foreground image FG and the background images BG0 and BG1.

When the sprite engine 20 reads the image data outside the sprite window WS from the frame buffer 23, the sprite window signal SPR is turned off because the window flag FLG of this image data is "0". And, because the sprite window signals from the enable circuits 67b - 67d are off, but the outside of the sprite window WS is used, the sprite window signals SPR from the inside/outside control circuit 68b - 68d are turned on. Therefore, the foreground image transparency processing switching signal FGSW and the background image transparency processing switching signals BG0SW and BG1SW are turned on.

Therefore, the color codes CLC of image data FGDT, BG0DT, and BG1DT sent to the switches 50, 51, and 52 are all converted to "00H", and are output from the terminal 58. Thus, the area AR2 becomes a single-color back screen because transparency processing is performed on the foreground image FG and background images BG0 and BG1,

On the other hand, when image data inside the sprite window WS is read from the frame buffer 23, the sprite window signal SPR is turned on because the window flag FLG of this image data is "1". And, the sprite window signals SPR from the enable circuits 67b - 67d are turned on but the sprite window signals SPR from the inside/outside control circuits 68b - 68d are turned off because the inside of the sprite window WS is not effective. Therefore, the foreground image transparency processing switching signal FGSW and the background image transparency processing switching signals BG0SW and BG1SW are all turned off.

Therefore, image data FGDT, BG0DT, and BG1DT are sent to the priority circuit 55 without conversion. They are then sent to the color operation circuit 57 via the color RAM control circuit 56, which selects the top-priority image data from FGDT, BG0DT, and BG1DT and outputs its color code CLC.

To make any given location only in the background a sprite window, the MSB of the corresponding image data in the frame buffer must be changed to "1".

### D. Combination of a plurality of windows

The following explains how a rectangle window, a line window, and a sprite window are combined.

First, a plurality of windows overlapped using the AND logic are explained. For example, the rectangle window WR and the sprite window WS are overlapped and, color operation or transparency processing is performed only in the overlapped area AR3, as shown in Figure 10. To do so, the CPU 15 sets up "AND logic" in Window Logic LOG in the control registers 66a - 66d.

Although the rectangle window signal REC is turned on in the area AR4 which is the part of the rectangle window WR not including the area AR3, the AND-OR control circuits 69a - 69d determine that the area AR4 is outside the effective window area (area AR3). Thus, the color operation processing switching signal CLSW (for color operation processing) or the foreground image transparency processing switching signal FGSW and the background image transparency processing switching signals BG0SW and BG1SW (for transparency processing) are turned off. Similarly, in the area AR5 which is the part of the sprite window WS not including the overlapped area AR3, the sprite window signal SPR is turned on but the AND-OR control circuits 69a - 69d determine that it is off.

On the other hand, the AND-OR control circuits 69a - 69d determine that the area AR4 is the effective area of the window, and the color operation processing switching signal CLSW (for color operation processing) or at least one of the foreground image transparency processing switching signal FGSW and background image transparency processing switching signals BG0SW and BG1SW (for transparency processing) is turned on.

In addition, when the outside of the rectangle window WR and the inside of the sprite window WS are effective and when they are overlapped based on the AND logic as shown in Figure 11, the AND-OR control circuits 69a - 69d determine that only the part of the sprite window WS not including the area AR3 (i.e., area AR5) is effective.

When the inside of the rectangle window WR and the inside of the sprite window WS are effective and when they are overlapped based on the OR logic as shown in Figure 12, the AND-OR circuits 69a - 69d determine that all the areas AR3, AR4, and AR5 are effective.

It is also possible to perform an independent processing on each of a plurality of windows displayed at the same time; for example, it is possible to perform color operation processing on the inside of the rectangle window and to perform transparency processing on the inside of the sprite window. In this case, Color Operation Enable CLENB is set on the rectangle window, and Sprite Window Enable SWEN is set on the screen to be displayed as a sprite window on which transparency processing is to be performed.

### (3) Effects of the embodiment

As described above, since a window is set up on a pixel basis by using the MSB of the image data expanded in the frame buffer in this embodiment, a complex-shaped window can be created without special registers. In addition, the ability to provide a window in the foreground image and the background images, to use a plurality of windows at the same time and to perform color operation processing and transparency processing on each of a the windows makes it possible to provide a variety of display.

### (4) Other Embodiments

This invention is not limited to the above embodiment. It can be applied not only to TV video entertainment systems but also to various systems such as personal computers and other computer image display systems.

In this embodiment, the MSB is used to provide the window flag FLG. The window flag need not always be the MSB; any of unused bits in image data FGDT may be used.

### INDUSTRIAL APPLICABILITY

According to this invention, image data once stored in the frame buffer may be read to change the specified bit, as described above. In addition, since it is possible to specify, on a pixel basis, whether or not a specific piece of data belongs to a specific window, a complex-shaped window may be created. Creating a window using image data expanded in the frame buffer does not require special registers, thus eliminating the need to increase the amount of hardware.

Combining a complex-shaped window with a conventional fixed-format window, as well as the ability to perform transparency processing and color operation processing in either the inside or outside of a window, makes a variety types of display possible.

## Claims

1. A frame buffer access method of reading image data from an image data storage means and writing the image data into a frame buffer, said frame buffer access method comprising the steps of:
reading image data, already stored at an address corresponding to an image of a shape, from said frame buffer;
changing the value of a specified bit of image data read from said frame buffer; and
writing the image data back at said address in said frame buffer.

2. A frame buffer access method as claimed in claim 1, wherein said shape is specified by the shape of an image read from said image data storage means.

3. An image processing method comprising the steps of:
reading image data, set up for each pixel of a foreground image, from the first storage means and expanding it into a frame buffer; reading said image data from said frame buffer in a specified timing and, at the same time, reading image data, set up for each pixel of at least one background screen, from the second storage means; and comparing the display priority of image data of said foreground image with the display priority of image data of said background image and, based on this priority, generating display data by combining said foreground image and said background image, wherein,
image data already stored at an address corresponding to an image of a shape is read from said frame buffer;
the value of a specified bit of the image data read from said frame buffer is changed;
the image data is written back at said address in said frame buffer; and
a check is made, when reading the image data of the foreground image in the specified timing from said frame buffer, to see whether or not the value of said specified bit has been changed and, if it has been changed, image data with the changed value is displayed inside a window and image processing is performed either inside or outside of this window.

4. An image processing method comprising the steps of:
reading image data, set up for each pixel of a foreground image, from the first storage means and expanding it into a frame buffer; reading said image data from said frame buffer in a specified timing and, at the same time, reading image data, set up for each pixel of at least one background screen, from the second storage means; and comparing the display priority of image data of said foreground image with the display priority of image data of said background image and, based on this priority, generating display data by combining said foreground image and said background image, wherein,
the area of a first window is determined by specifying the coordinates of the vertical and horizontal start points and end points of said first window whose shape has been set up for at least one of said foreground image and background image;
image data already stored at an address corresponding to an image of a shape is read from said frame buffer;
the value of a specified bit of the image data read from said frame buffer is changed;
the image data is written back at said address in said frame buffer; and
a check is made, when reading the image data of the foreground image in the specified timing from said frame buffer, to see whether or not the value of said specified bit has been changed and, if it has been changed, image data with the changed value is displayed inside a second window; and
image processing is performed either the inside or outside of said second window and said first window.

5. An image processing method as claimed in claim 3 or 4, wherein the value of the most significant bit of said image data read from said frame buffer is changed.

6. An image processing method as claimed in claim 3, 4, or 5, wherein said image processing is a transparency processing in which one or more pixels of a foreground image or at least one of background images is forced to change to transparent pixels in either the inside or outside of said window.

7. An image processing method as claimed in claim 3, 4, or 5, wherein said image processing is a color operation processing in which color operation, including addition operation, is performed on the image data of non-transparent pixels in either the inside or outside of said window.

8. An image processing method as claimed in claim 3, 4, or 5, wherein either said image processing is a transparency processing in which one or more pixels of a foreground image or at least one of background images is forced to change to transparent pixels in the inside or outside of said window, or said image processing is a color operation processing in which color operation, including addition operation, is performed on the image data of non-transparent pixels in the inside or outside of said window.

9. An image processing method as claimed in claim 3, 4, or 5, wherein said shape is specified by the shape of an image read from said image data storage means.

10. A frame buffer access system having a first terminal to which an image data storage means is connected and a second terminal to which a frame buffer is connected, said frame buffer access system comprising:
an address specification means for specifying an address in said frame buffer corresponding to an image of any shape;
a frame buffer read means for reading image data, already stored at an address specified by said address specification means, from said frame buffer;
a bit change means for changing the value of a specified bit of image data read by said frame buffer read means; and
a frame buffer write means for accessing said frame buffer and for writing back said image data whose value of said specified bit has been changed.

11. A frame buffer access system as claimed in claim 10, wherein said address specification means specifies an address corresponding to an image to be read from said image data storage means.

12. An image processing system comprising:
a CPU for issuing a command;
a first storage means in which said command for displaying a foreground image on a display and image data set up for each pixel of the foreground image are stored;
a frame buffer in which image data corresponding to said foreground image to be displayed on a display is stored;
a foreground image control means for reading the image data of said foreground image from said first storage manes and then writing the image to said frame buffer and for reading the image data from said frame buffer in a specified timing for output;
a second storage means in which image data set up for each pixel of a background image is stored; and
a background image control means for reading said image data from said second storage means based on a command issued from said CPU, for determining the display priority of the image data of a foreground sent from said foreground image control means and the image data of said background image, and, based on said priority, for generating display data obtained by combining said foreground image and background image, wherein,
said foreground image control means reads image data expanded in said frame buffer and specified by said command, changes the value of a specified bit, and then writes the image data back to the same address in the frame buffer; and
said background image control means determines the image data to be image data that is displayed inside a window and performs image processing on the inside or outside of this window when the value of the specified bit of foreground image data sent from said foreground image control means has been changed by said foreground image control means.

13. An image processing system comprising:
a CPU for issuing a command;
a first storage means in which said command for displaying a foreground image on a display and image data set up for each pixel of the foreground image are stored;
a frame buffer in which image data corresponding to said foreground image to be displayed on a display is stored;
a foreground image control means for reading the image data of said foreground image from said first storage manes and then expanding the image in said frame buffer and for reading the image data from said frame buffer in a specified timing for output;
a second storage means in which image data set up for each pixel of a background image is stored; and
a background image control means for reading said image data from said second storage means based on a command issued from said CPU, for determining the display priority of the image data of a foreground sent from said foreground image control means and the image data of said background image, and, based on said priority, for generating display data obtained by combining said foreground image and background image, wherein,
said CPU specifies the coordinates of the vertical and horizontal start points and end points of a first window, whose shape has been set up beforehand, for at least one of said foreground image and background image, for said background image control means;
said foreground image control means reads image data expanded in said frame buffer and specified by said command, changes the value of a specified bit, and then writes the image data back to the same address in the frame buffer; and, said background image control means determines the image data to be image data that is displayed inside a second window and performs image processing on the inside or outside of this second window and said first window when the specified bit of foreground image data sent from said foreground image control means has been changed by said foreground image control means.

14. An image processing system as claimed in claim 12 or 13, wherein said foreground image control means comprising:
an address specification means for specifying an address in said frame buffer corresponding to an image of any shape;
a frame buffer read means for accessing said frame buffer and for reading image data already stored at an address specified by said address specification means;
a bit change means for changing the value of a specified bit of image data read by said frame buffer read means; and
a frame buffer write means for accessing said frame buffer and for writing back said image data whose value of said specified bit has been changed.

15. An image processing system as claimed in claim 14, wherein the said address specification means specifies an address corresponding to an image read from said image data storage means.

16. An image processing system as claimed in claim 14, wherein said bit change means changes the value of the most significant bit of said image data.

17. An image processing system as claimed in claim 12 or 13, wherein said foreground image control means comprising:
a window detection section for detecting whether or not the value of said specified bit of image data of said foreground image has been changed by said foreground image control means;
a window control section for determining that image processing is to be performed on either the inside or outside of a window consisting of image data according to a command from said CPU when said window detection section has detected that the value of the specified bit of said image data has been changed;
a background image control section for accessing said second storage means and for reading the image data of said background image; and
a display control section for combining the image data of said foreground image and the image data of said background image for output under control of said window control section.

18. An image processing system as claimed in claim 17, wherein said window control section comprising:
a color operation control section for outputting a color operation processing signal indicating that color operation, including addition operation, be performed on the image data of non-transparent pixels for either the inside or the outside of said window according to a command from said CPU and to the detection result of said window detection section;
a foreground image transparency processing control section for setting up a window for said foreground image according to a command from said CPU and to the detection result of said window detection section and for outputting a foreground image transparency processing signal indicating that a pixel be forced to change to a transparent pixel for either the inside or the outside of the window; and
at least one background image transparency processing control section for setting up a window in said background image according to a command from said CPU and to the detection result of said window detection section for each of said background images and for outputting a background image transparency processing signal indicating that said transparency processing be performed on either the inside or the outside of the window, and
said display control section comprising:
a first switch means for forcing the image data of said foreground image to change to the image data of transparent pixels when said foreground image transparency processing signal is received;
at least one second switch means for forcing the image data of said background image to the image data of transparent pixels when said background image transparency processing signal is received, for each of said background image transparency processing control section; and
a color operation circuit for performing said color operation on image data where the coordinates of said foreground image match the coordinates of said background image when said color operation processing signal is received.

19. A video entertainment system comprising:
a CPU for issuing a command;
a first storage means in which said command for displaying a foreground image on a display and image data set up for each pixel of the foreground image are stored;
a frame buffer in which image data corresponding to said foreground image to be displayed on a display is stored;
a foreground image control means for reading the image data of said foreground image from said first storage manes and then writing the image to said frame buffer and for reading the image data from said frame buffer in a specified timing for output;
a second storage means in which image data set up for each pixel of a background image is stored; and
a background image control means for reading said image data from said second storage means based on a command issued from said CPU, for determining the display priority of the image data of a foreground sent from said foreground image control means and the image data of said background image, and, based on said priority, for generating display data obtained by combining said foreground image and background image, wherein,
said foreground image control means reads image data expanded in said frame buffer and specified by said command, changes the value of a specified bit, and then writes the image data back to the same address in the frame buffer; and
said background image control means determines the image data to be image data that is displayed inside a window and performs image processing on the inside or outside of this window when the value of the specified bit of foreground image data sent from said foreground image control means has been changed by said foreground image control means.

20. A video entertainment system comprising:
a CPU for issuing a command;
a first storage means in which said command for displaying a foreground image on a display and image data set up for each pixel of the foreground image are stored;
a frame buffer in which image data corresponding to said foreground image to be displayed on a display is stored;
a foreground image control means for reading the image data of said foreground image from said first storage manes and then expanding the image in said frame buffer and for reading the image data from said frame buffer in a specified timing for output;
a second storage means in which image data set up for each pixel of a background image is stored; and
a background image control means for reading said image data from said second storage means based on a command issued from said CPU, for determining the display priority of the image data of a foreground sent from said foreground image control means and the image data of said background image, and, based on said priority, for generating display data obtained by combining said foreground image and background image, wherein,
said CPU specifies the coordinates of the vertical and horizontal start points and end points of a first window, whose shape has been set up for at least one of said foreground image and background image, for said background image control means;
said foreground image control means reads image data expanded in said frame buffer and specified by said command, changes the value of a specified bit, and then writes the image data back to the same address in the frame buffer; and,
said background image control means determines the image data to be image data that is displayed inside a second window and performs image processing on the inside or outside of this second window and said first window when the specified bit of foreground image data sent from said foreground image control means has been changed by said foreground image control means.

21. A video entertainment system as claimed in claim 19 or 20, wherein said foreground image control means comprising:
an address specification means for specifying an address in said frame buffer corresponding to an image of any shape;
a frame buffer read means for accessing said frame buffer and for reading image data already stored at an address specified by said address specification means;
a bit change means for changing the value of a specified bit of image data read by said frame buffer read means; and
a frame buffer write means for accessing said frame buffer and for writing back said image data whose value of said specified bit has been changed.

22. A video entertainment system as claimed in claim 21, wherein the said address specification means specifies an address corresponding to an image read from said image data storage means.

23. A video entertainment system as claimed in claim 21, wherein said bit change means changes the value of the most significant bit of said image data.

24. A video entertainment system as claimed in claim 19 or 20, wherein said foreground image control means comprising:
a window detection section for detecting whether or not the value of said specified bit of image data of said foreground image has been changed by said foreground image control means;
a window control section for determining that image processing is to be performed on either the inside or outside of a window consisting of image data according to a command from said CPU when said window detection section has detected that the value of the specified bit of said image data has been changed;
a background image control section for accessing said second storage means and for reading the image data of said background image; and
a display control section for combining the image data of said foreground image and the image data of said background image under control of said window control section.

25. A video entertainment system as claimed in claim 24, wherein said window control section comprising:
a color operation control section for outputting a color operation processing signal indicating that color operation, including addition operation, be performed on the image data of non-transparent pixels for either the inside or the outside of said window according to a command from said CPU and to the detection result of said window detection section;
a foreground image transparency processing control section for setting up a window for said foreground image according to a command from said CPU and to the detection result of said window detection section and for outputting a foreground image transparency processing signal indicating that a pixel be forced to change to a transparent pixel for either the inside or the outside of the window; and
at least one background image transparency processing control section for setting up a window in said background image according to a command from said CPU and to the detection result of said window detection section for each of said background images and for outputting a background image transparency processing signal indicating that said transparency processing be performed on either the inside or the outside of the window, and
said display control section comprising:
a first switch means for forcing the image data of said foreground image to change to the image data of transparent pixels when said foreground image transparency processing signal is received;
at least one second switch means for forcing the image data of said background image to the image data of transparent pixels when said background image transparency processing signal is received for each of said background image transparency processing control section; and
a color operation circuit for performing said color operation on image data where the coordinates of said foreground image match the coordinates of said background image when said color operation processing signal is received.
